# FASCICULE DE BREVET EUROPEEN

(11) **EP 0 576 892 B1**
(45) Date de publication et mention de la délivrance du brevet: **10.01.1996**
(21) Numéro de dépôt: 93109456.9
(22) Date de dépôt: 14.06.1993
(51) Int. Cl.: B29D 30/72

(54) **Moule pour pneumatique, son procédé de réalisation, et procédé de moulage d'un pneumatique au moyen d'un tel moule**
Reifenform, Verfahren zu deren Herstellung und Reifenformverfahren mit Hilfe einer solchen Form
Tire mould, manufacturing process for such a mould and tire molding process using such a mould

(30) Priorité: 02.07.1992 FR 9208299
(43) Date de publication de la demande: 05.01.1994
(73) Titulaire: COMPAGNIE GENERALE DES ETABLISSEMENTS MICHELIN - MICHELIN & CIE, F-63040 Clermont-Ferrand Cédex (FR)
(72) Inventeur: Espie, Jacques, F-63430 Pont-du-Chateau (FR); Lefevre, Daniel, F-63670 La-Roche-Blanche (FR)
(74) Mandataire: Bauvir, Jacques

(56) Documents cités:
- CH-A- 679 917
- FR-A- 999 395
- FR-A- 2 541 624
- US-A- 1 371 501
- US-A- 5 038 504
- PATENT ABSTRACTS OF JAPAN vol. 14, no. 107 (M-942)(4050) 27 Février 1990 & JP-A-13 10 913 (TOYO TIRE & RUBBER CO. LTD.)

## Description

La présente invention concerne les moules pour pneumatiques. Plus particulièrement elle se rapporte au moulage des marquages prévus dans les flancs des pneumatiques.

Il est bien connu que les flancs des pneumatiques comportent un grand nombre de marquages : la marque du fabricant, le type de pneumatique, sa dimension ainsi que des marquages réglementaires concernant l'usine de fabrication, la date de fabrication, et la capacité de charge ou de vitesse du pneumatique ou d'autres encore. Ces marquages sont obtenus en réalisant sur le moule les négatifs correspondant à ces marquages. La partie du moule assurant le moulage de la surface extérieure du flanc d'un pneumatique s'appelle la coquille. Celle-ci comporte des lettres usinées dans la masse, ainsi que des plaquettes amovibles utilisées pour les marquages comportant des indications qu'il faut changer régulièrement, comme par exemple la période de fabrication du pneumatique. On trouve un exemple d'une telle plaquette amovible dans le brevet US 4 547 139.

Ceux des marquages à caractère publicitaire font l'objet à l'heure actuelle d'efforts de présentation constants. Par exemple, on ajoute sur le flanc du pneumatique des motifs purement décoratifs destinés à créer dans l'esprit du consommateur le moyen d'identifier l'unité d'une gamme de Produits chez un fabricant. Le nom du fabricant et le type de pneumatique doivent apparaître sur le flanc de celui-ci de façon aussi attractive que possible. Ceci conduit les concepteurs de pneumatiques à prévoir des marquages en relief ou en creux par rapport à la surface du flanc du pneumatique, et/ou à réaliser sur les marques des striures destinées à faire se détacher les lettres par rapport au flanc du pneumatique. Il est souhaitable de laisser une latitude de conception de marquages aussi grande que possible, quant à leur forme et leur aspect. Par ailleurs, il est souhaitable que la qualité du moulage reste parfaite, c'est-à-dire qu'il n'apparaisse aucun défaut de moulage, comme par exemple des manques de caoutchouc dans certaines zones des marquages, dues à des poches d'air dans le moule.

Le but de la présente invention est de faciliter l'obtention de marquages par reproduction lors du moulage de gravures apparaissant sur la coquille des moules de pneumatiques. Un objectif de l'invention est de supprimer tous les problèmes d'éventation existant lorsque l'on cherche à réaliser des marquages faisant un relief important sur les flancs du pneumatique, tout en évitant de devoir percer des évents sur les coquilles des moules. Un autre but de l'invention est de pouvoir plus facilement obtenir un effet de contraste entre le flanc du pneumatique et les marquages moulés sur celui-ci. Un autre but de l'invention est de pouvoir proposer une solution qui s'adapte aussi bien au marquage des lettres, des chiffres, ou bien des logos et autres signes distinctifs.

Selon l'invention, le moule pour pneumatique, comportant au moins une coquille destinée à mouler la surface extérieure d'un flanc de pneumatique, ladite coquille comportant le négatif de marquages ayant un contour quelconque, à mouler sur ledit flanc, est caractérisé en ce que, pour certains marquages au moins, la coquille comporte un perçage dont la forme apparaissant sur la face de moulage de la coquille correspond exactement au contour dudit marquage, le perçage étant obturé par une pièce rapportée et amovible, le jeu existant entre la coquille et la pièce amovible étant mis en communication avec l'extérieur du moule pour assurer l'éventation.

L'invention est applicable à tout type de marquage, mais est surtout intéressante à utiliser pour les marquages de surface assez importante comme les lettres du fabricant ou l'identification de la dimension et du type de pneumatique. L'invention propose plusieurs principes de réalisation différents pour la pièce rapportée, qui ménagent tous un jeu sur tout le pourtour des marquages. Grâce à cela, l'air refoulé lors du moulage du caoutchouc trouve un chemin pour s'échapper, tout le long de la limite de chaque marquage. Cela ouvre la possibilité de réaliser des marquages dont le relief est très important, par exemple supérieur à 0,5 mm, alors qu'auparavant il était très difficile de pouvoir garantir un moulage parfait si la gravure réalisée en creux sur le moule avait une profondeur dépassant quelques dizièmes de millimètres, car alors on emprisonnait des poches d'air lors du moulage.

L'invention sera mieux comprise en consultant la suite de la description en parallèle avec les dessins qui feront bien comprendre tous les aspects de l'invention.

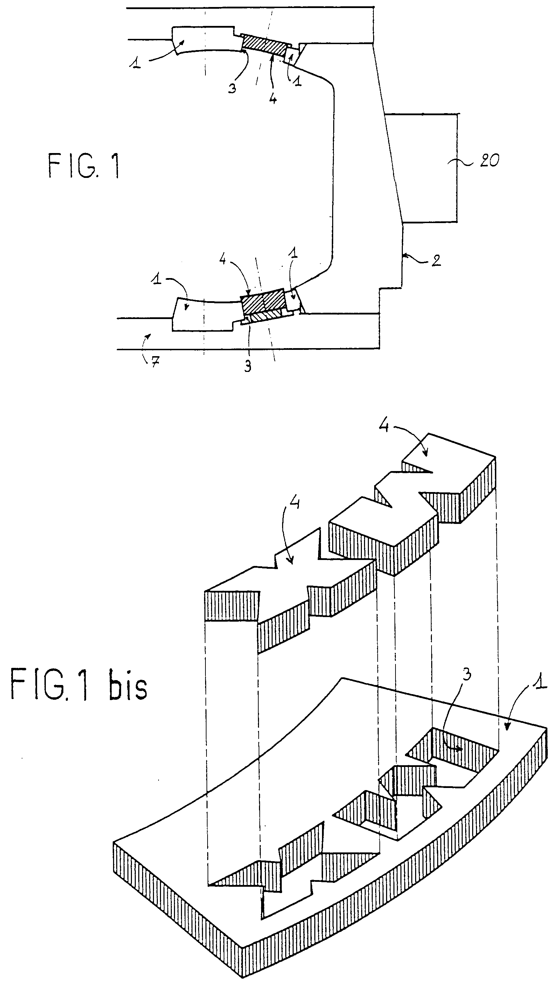

La figure 1 est une coupe radiale d'un moule selon l'invention.

La figure 1bis est une perspective montrant les marquages.

La figure 2 est une coupe radiale d'une coquille de moule.

La figure 3 et la figure 4 illustrent deux utilisations du moule selon l'invention pour réaliser un marquage en relief (figure 3) ou en creux (figure 4).

La figure 5 illustre un moule d'injection d'une pièce rapportée.

La figure 6 illustre une deuxième variante de conception d'une pièce rapportée.

La figure 7 illustre une troisième variante de conception d'une pièce rapportée.

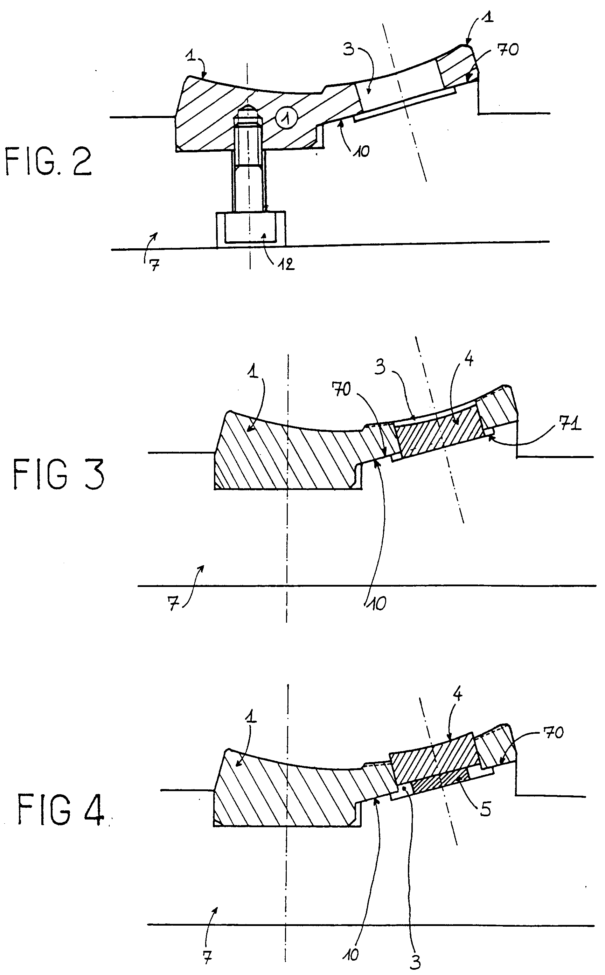

Une vue en coupe radiale complète du moule selon l'invention apparaît à la figure 1. On voit les coquilles 1 et les secteurs 2 maintenus fermés par une frette conique 20. La coquille 1 comporte un perçage 3 réalisé à l'image exacte du contour du marquage. On voit que les marquages sont des lettres dont on aperçoit la découpe à la figure 1bis. Aux figures 2 à 5, on voit que la face arrière de la coquille 1 comporte une portée plane 10 réalisée parallèlement à une tangente au profil intérieur de la coquille vue en coupe radiale. La tangente dont il est question est choisie pour correspondre à l'inclinaison moyenne de la zone de la coquille 1 comportant les perçages 3. On appelle face arrière ou face extérieure de la coquille 1 celle correspondant à l'opposé de la face assurant le moulage du caoutchouc, cette dernière étant appelée face avant ou bien face intérieure.

Grâce à cette réalisation, l'épaisseur de la coquille 1 est sensiblement constante dans toute la zone où sont réalisés des perçages 3. La conception et l'insertion des pièces rapportées s'en trouve facilitée. La coquille 1 est montée sur un support 7 dont la forme correspond à la face arrière de la coquille 1. Le support 7 comporte une face d'appui 70 plane qui correspond à la portée plane 10 réalisée sur la coquille 1. La coquille 1 est maintenue en place sur le support 7 au moyen de vis 12.

Le perçage à la forme exacte du marquage à obtenir peut être réalisé par différents moyens techniques bien connus de l'homme du métier : électro-érosion par enfonçage, électro-érosion au fil, découpe avec un outil de coupe, découpe laser ou encore découpe par jet d'eau à haute pression.

Trois variantes de réalisation de la pièce amovible sont proposées par la présente invention. L'une de ces variantes est décrite tout particulièrement à l'aide des figures 3 à 5. La pièce amovible est un insert 4 réalisé à la forme exacte du marquage à obtenir. Il est monté avec coulissement possible dans le perçage 3 et on prévoit des moyens pour bloquer le coulissement de l'insert 4, éventuellement seulement dans un seul sens. En jouant sur la position de cet insert 4 par rapport à la coquille 1 on peut réaliser, lors du moulage, des marquages en relief (voir figure 3) ou bien en creux (voir figure 4). Le réglage de la profondeur de pénétration ou de dépassement de l'insert 4 par rapport à la coquille est très simple : il suffit de prévoir une cale 5 en fonction de la position souhaitée. Sous l'effet de la pression de moulage du pneumatique, l'insert 4 a tendance à reculer par rapport à la coquille et son coulissement est bloqué par la cale 5.

L'insert peut être réalisé dans n'importe quel matériau. De préférence, on utilise un matériau qui puisse être coulé. Il est très avantageux de se servir de la coquille 1 elle-même sur laquelle on a réalisé le ou les perçages, comme élément constitutif d'un moule d'injection. Grâce à deux couvercles 41, 42 qui s'ajustent exactement sur les faces intérieures et extérieures de la coquille 1, on définit un espace de moulage dans lequel on va pouvoir injecter la matière constituant l'insert. Le couvercle 41 recouvrant la face extérieure de la coquille 1 comporte un canal d'injection 43 aboutissant à chacun des perçages 3.

Le procédé de réalisation d'un insert 4 consiste donc à injecter dans le moule ainsi constitué une matière en phase liquide. Après solidification, on enlève les couvercles 41, 42 et la matière en excès sur l'insert, solidifié dans le canal d'injection 43. Puis on vérifie le coulissement des inserts 4, ou bien on les démoule. La partie 420 du couvercle 42 qui ferme l'espace d'injection de l'insert 4 peut avoir un état de surface permettant de conférer à l'insert 4 un aspect granité ou rugueux ou au contraire très lisse. Il est également possible d'effectuer un traitement de surface pour conférer à l'aspect du caoutchouc moulé, à l'endroit des marquages, un contraste important par rapport à l'aspect du caoutchouc moulé sur le reste de la coquille. Il peut s'agir d'un revêtement de surface ou un traitement mécanique par grenaillage ou usinage.

L'insert 4 ainsi réalisé a une épaisseur qui correspond exactement à l'épaisseur de la coquille 1 à l'endroit du perçage 3. Dans ce cas, si l'on souhaite obtenir un marquage apparaissant en relief sur le pneu, il est nécessaire d'enfoncer de façon correspondante l'insert 4 par rapport à la surface de la coquille 1. Afin de permettre le recul de l'insert 4 par rapport à la coquille, le support 7 comporte un dégagement suffisant obtenu grâce à une rainure 71 réalisée sur la surface 70 en regard de la position des perçages 3.

Grâce au jeu qui existe toujours entre l'insert 4 et la coquille 1, et entre la coquille 1 et le support 7, l'air emprisonné lors du moulage du pneumatique va pouvoir cheminer vers l'extérieur. On obtient une éventation du moule qui ne laisse aucune trace visible sur le pneumatique. Si le jeu entre l'insert 4 et la coquille 1 est suffisamment faible (typiquement inférieur à 0,05 mm), alors l'air peut s'échapper par la fente sans que le caoutchouc ne puisse fluer entre l'insert 4 et la coquille 1. Si le jeu est légèrement plus important, il est possible qu'une petite quantité de caoutchouc flue entre coquille 1 et insert 4. Il peut en résulter une petite bavure de moulage. Cependant, comme elle est localisée exactement sur le tracé correspondant à la limite du marquage, cette bavure de moulage reste très discrète, ce qui fait que l'aspect esthétique du pneumatique moulé ne s'en trouve pas dégradé. On peut bien entendu favoriser le cheminement de l'air vers l'extérieur en réalisant entre coquille 1 et support 7 des rainures assurant le cheminement de l'air vers l'extérieur du moule.

Du fait que les inserts assurant le moulage des marquages sur les flancs du pneumatique sont réalisés sous forme de pièces séparées de la coquille, on dispose d'une très grande latitude de conception pour réaliser les faces de moulage du caoutchouc sur ces inserts. Cela permet de réaliser des faces qui soient différentes de la surface de la coquille, au point de vue de leur rugosité ou au point de leur forme qui peut par exemple être plane.

Notons au passage que dans le cas de lettres comme A, B, D, O, ou d'autres lettres ou signes qui comportent un contour fermé, il faut usiner ou mouler l'insert de telle sorte qu'il y ait une différence de niveau entre le contour et la surface fermée emprisonnée par le contour, comme par exemple l'intérieur du O. Au cas où la lettre apparait en creux sur le flanc du pneu, et selon la profondeur du relief encerclé par le contour du marquage, il peut être souhaitable de parfaire l'éventation en réalisant un petit trou d'éventation transversal, sensiblement parallèlement à la surface de la coquille, pour conduire l'air depuis l'intérieur vers l'extérieur du contour du marquage. Ou alors on applique le principe de cette invention à la surface emprisonnée, en désolidarisant celle-ci de la lettre proprement dite.

Lorsque le perçage 3 est réalisé par découpe de la matière, par exemple découpe au fil, la chute peut être utilisée pour réaliser l'insert 4, après un dépôt électrochimique de métal pour compenser la différence de section.

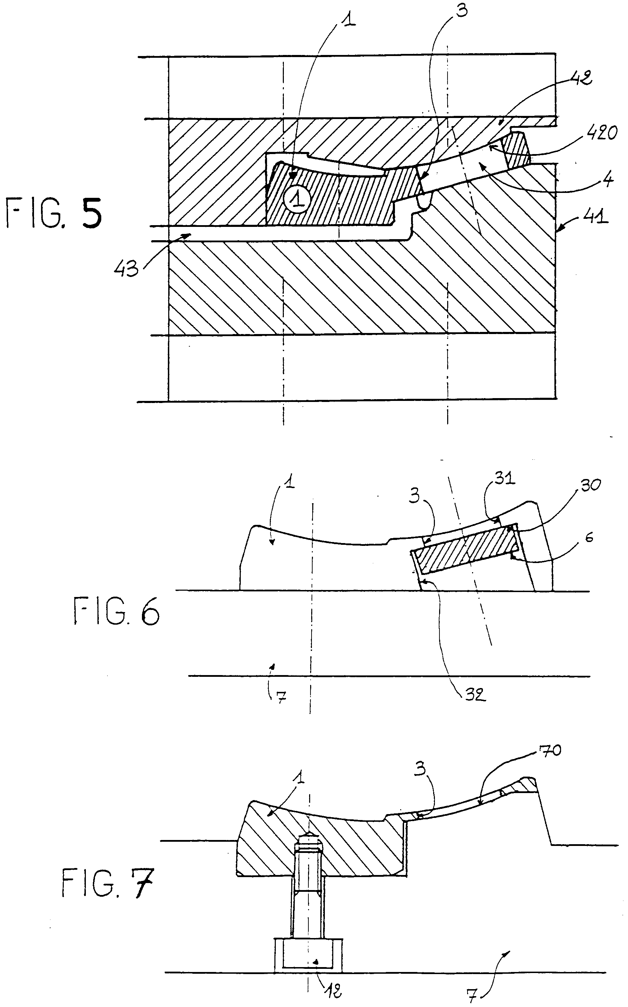

Dans l'hypothèse où l'on souhaite réaliser seulement un marquage en relief sur le pneumatique, et au cas où on ne désire pas pouvoir régler la hauteur de ce relief, on peut utiliser une autre solution dont deux variantes sont décrites avec l'appui des figures 6 et 7.

Le perçage 3 dont il est question est toujours un perçage débouchant, c'est à dire réalisé de part en part de l'épaisseur de la coquille 1. Cette fois, on voit que le perçage 3 comporte un épaulement 30. La section du perçage située entre la surface intérieure de la coquille 1 et l'épaulement 30 est désignée par la référence 31, et découpée selon le contour exact du marquage comme dans les autres variantes de réalisation. Au-delà de l'épaulement 30 du côté extérieur du moule, la section du perçage 3 est agrandie, et son contour peut être quelconque.

A la figure 6, la pièce rapportée est une simple plaque 6 qui vient en butée sur l'épaulement 30, et dont on assure le calage (vis, ressort, cales) afin qu'elle ne se déplace pas sous l'effet de la force provoquée par le moulage. Là encore, le jeu subsistant entre la plaque 6 et l'épaulement 30 va permettre le cheminement de l'air et ainsi assurer une éventation parfaite du moule au niveau des marquages. De préférence, on réalise sur l'arrière de la coquille une rainure 32 circulaire dont le fond constitue les épaulements de plusieurs perçages. La rainure est en arc de cercle ou en cercle complet selon l'étendue des marquages réalisés. La pièce rapportée est une plaque 6 d'obturation commune à plusieurs perçages ou à tous les perçages. La plaque 6 d'obturation correspondant à ce mode de réalisation est plus simple à réaliser.

A la figure 7, on voit que la pièce rapportée est intégrée au support 7 arrière de la coquille 1. Cette variante est surtout intéressante lorsqu'il faut prévoir des marquages sur tout le tour de la coquille 1. Dans ce cas, la partie de la coquille 1 au droit des marquages a une épaisseur correspondant sensiblement à la surépaisseur des marquages que l'on veut obtenir. La face arrière 10 de la coquille à cet endroit est plane, ou bien suit le profil de la partie avant. Le support comporte une protubérance 70 de forme correspondant à la forme de la face arrière 10 de la coquille 1 au droit des marquages. Cette protubérance 70 vient masquer le fond du perçage 3, tout comme la plaque 6 de la variante précédente. Aussi bien la face de moulage de la plaque 6 que celle de la protubérance 70 peuvent aussi faire l'objet d'un traitement comme expliqué ci-dessus pour l'insert 4, afin de modifier l'aspect de surface du caoutchouc moulé contre cette plaque 6 ou cette protubérance 70.

## Revendications

1. Moule pour pneumatiques, comportant au moins une coquille (1) destinée à mouler la surface extérieure d'un flanc de pneumatique, ladite coquille (1) comportant le négatif de marquages ayant un contour quelconque, à mouler sur ledit flanc, caractérisé en ce que, pour certains marquages au moins, la coquille comporte un perçage (3) dont la forme apparaissant sur la face de moulage de la coquille correspond exactement au contour dudit marquage, le perçage étant obturé par une pièce rapportée (4, 6, 70), le jeu existant entre la coquille (1) et ladite pièce rapportée (4, 6, 70) étant mis en communication avec l'extérieur du moule pour assurer l'éventation.

2. Moule selon la revendication 1, caractérisé en ce que ladite pièce rapportée est un insert (4) monté coulissant dans le perçage (3), et en ce qu'il comporte des moyens pour bloquer le coulissement de l'insert (4).

3. Moule selon la revendication 1, caractérisé en ce que le perçage (3) comporte un épaulement (30), la section du perçage (3) étant agrandie au-delà de l'épaulement (30) du côté extérieur du moule, par rapport à la section (31) du perçage (3) située entre l'épaulement (30) et l'intérieur du moule, et en ce que ladite pièce rapportée vient en butée sur l'épaulement.

4. Moule selon la revendication 1, caractérisé en ce que la pièce rapportée est intégrée à un support (7) sur lequel la coquille (1) est montée.

5. Moule selon l'une des revendications 1 à 4, caractérisé en ce que la face de moulage desdites pièces rapportées comporte un traitement de surface pour faire apparaître sur les marquages en caoutchouc moulé un aspect de surface très contrasté par rapport à l'aspect de surface du caoutchouc moulé ailleurs sur la coquille.

6. Moule selon la revendication 2, 3 ou 4, caractérisé en ce que la face arrière de la coquille (1) comporte une portée plane (10), réalisée parallèlement à une tangente au profil intérieur de la coquille (1) vue en coupe radiale, la tangente choisie étant celle d'inclinaison moyenne dans la zone de la coquille (1) correspondant aux perçages (3), et en ce que la coquille (1) est montée sur un support (7) de forme correspondant à ladite face arrière de la coquille (1), ayant une face d'appui plane (70) correspondant à ladite portée plane (10) réalisée sur la coquille (1).

7. Moule selon la revendication 3, caractérisé en ce que l'arrière de la coquille (1) comporte une rainure circulaire dont le fond constitue les épaulements (30) de plusieurs perçages (3), et en ce que la pièce rapportée est constituée d'une plaque (6) d'obturation commune à plusieurs perçages.

8. Procédé de réalisation d'un insert (4) pour un moule selon la revendication 2, dans lequel on constitue un moule d'injection au moyen de la coquille (1) sur laquelle on a réalisé tous les perçages (3), correspondant exactement au contour dudit marquage, réalisés de part en part au travers de l'épaisseur de la coquille (1), et au moyen de deux couvercles (41, 42) s'ajustant exactement sur les faces intérieure et extérieure de la coquille (1), au moins au niveau des perçages (3), le couvercle (41) de la face extérieure comportant un canal d'injection (43) aboutissant à chacun des perçages (3), puis on injecte dans le moule ainsi constitué une matière en phase liquide, puis après solidification, on enlève les couvercles (41, 42) et la matière en excès sur l'insert (4).

9. Procédé de moulage d'un pneumatique portant, sur au moins un de ses flancs, des marquages moulés au moyen d'un moule selon l'une des revendications 1 à 6, dans lequel les marquages apparaissent en creux ou en relief par rapport à la surface du flanc, l'éventation dans la zone des marquages étant assurée grâce au jeu existant sur tout le pourtour des marquages.

10. Procédé de moulage selon la revendication 9, caractérisé en ce que le relief ou le creux des marquages est supérieur à 0,5 mm.

## Claims

1. A tyre mould comprising at least one shell (1) for moulding the outer surface of a tyre sidewall, said shell (1) comprising the negative of markings having any contour which is to be moulded on said sidewall, characterised in that, at least in the case of certain markings, the shell comprises a cutout (3) the shape of which appearing on the moulding face of the shell corresponds precisely to the contour of said marking, the cutout being closed by an attached part (4, 6, 70), the clearance present between the shell (1) and said attached part (4, 6, 70) being in communication with the outside of the mould in order to ensure the venting.

2. A mould according to Claim 1, characterised in that said attached part is an insert (4) slidably mounted in the cutout (3), and in that it includes means for blocking the sliding of the insert (4).

3. A mould according to Claim 1, characterized in that the cutout (3) comprises a shoulder (30), the section of the cutout (3) being enlarged beyond the shoulder (30) on the outer side of the mould as compared with the section (31) of the cutout (3) located between the shoulder (30) and the inside of the mould, and in that said attached part abuts against the shoulder.

4. A mould according to Claim 1, characterized in that the attached part is integrated with a support (7) on which the shell (1) is mounted.

5. A mould according to one of Claims 1 to 4, characterised in that the moulding face of said attached parts comprises a surface treatment in order to produce the appearance on the markings of moulded rubber of a surface which contrasts greatly with the appearance of the surface of the moulded rubber elsewhere on the shell.

6. A mould according to Claim 2, 3 or 4, characterised in that the rear face of the shell (1) has a flat surface (10) made parallel to a tangent to the inner profile of the shell (1) viewed in radial section, the tangent selected being that of average inclination in the zone of the shell (1) corresponding to the cutouts (3), and in that the shell (1) is mounted on a support (7) of shape corresponding to said rear face of the shell (1) and having a flat resting face (70) corresponding to said flat surface (10) made on the shell (1).

7. A mould according to Claim 3, characterised in that the rear of the shell (1) comprises a circular groove the bottom of which constitutes the shoulders (30) of several cutouts (3), and in that the attached part is formed of a closure plate (6) which is common to several cutouts.

8. A method of producing an insert (4) for a mould according to Claim 2, in which an injection mould is formed by means of the shell (1) in which there have been produced all the cutouts (3) corresponding precisely to the contour of said marking and made through the thickness of the shell (1), and by means of two covers (41, 42) in exact engagement with the inner and outer faces of the shell (1) at least at the level of the cutouts (3), the cover (41) of the outer face having an injection channel (43) leading to each of the cutouts (3), then a material in liquid phase is injected into the mould thus formed and then, after solidification, the covers (41, 42) and the excess material on the insert (4) are removed.

9. A method of moulding a tyre bearing, on at least one of its sidewalls, markings moulded by means of a mould according to one of Claims 1 to 6, in which the markings are recessed or in relief on the surface of the sidewall, the venting in the zone of the markings being ensured due to the clearance present over the entire periphery of the markings.

10. A method of moulding according to Claim 9, characterised in that the relief or recess of the markings is greater than 0.5 mm.

## Patentansprüche

1. Form für Luftreifen mit wenigstens einer Schale (1) zum Formen der Außenseite der Flanke eines Luftreifens, wobei die Schale (1) das Negativ von an der Flanke zu formenden Markierungen mit beliebigem Umriß aufweist,
**dadurch gekennzeichnet, daß**
wenigstens bei bestimmten Markierungen die Schale eine Bohrung (3) aufweist, deren an der Formseite der Schale auftretende Form exakt dem Umriß der Markierung entspricht und die durch ein angesetztes Teil (4, 6, 70) verschlossen ist, wobei das zwischen der Schale (1) und dem angesetzten Teil (4, 6, 10) bestehende Spiel mit dem Äußeren der Form zur Entlüftung in Verbindung steht.

2. Form nach Anspruch 1, dadurch gekennzeichnet, daß das angesetzte Teil ein Einsatz (4) ist, der gleitbeweglich in der Bohrung (3) montiert ist, und daß sie Mittel zum Blockieren der Gleitbewegung des Einsatzes (4) aufweist.

3. Form nach Anspruch 1, dadurch gekennzeichnet, daß die Bohrung (3) eine Schulter (30) aufweist, der Querschnitt der Bohrung (3) jenseits der Schulter (30) zur Außenseite der Form hin im Vergleich zum Querschnitt (31) der Bohrung (3) zwischen der Schulter (30) und dem Inneren der Form vergrößert ist, und daß das angesetzte Teil an der Schulter anschlägt.

4. Form nach Anspruch 1, dadurch gekennzeichnet, daß das angesetzte Teil in einen Träger (7) integriert ist, an dem die Schale (1) montiert ist.

5. Form nach einem der Ansprüche 1 bis 4, dadurch gekennzeichnet, daß die Formseite der angesetzten Teile eine Oberflächenbehandlung aufweist, um den Oberflächen der Markierungen aus geformtem Kautschuk ein stark gegen das Aussehen der Oberfläche des an anderer Stelle der Schale geformten Kautschuks kontrastierendes Aussehen zu verleihen.

6. Form nach Anspruch 2, 3 oder 4, dadurch gekennzeichnet, daß die Rückseite der Schale (1) eine Ansatzfläche (10) umfaßt, die parallel zu einer Tangente zum Innenprofil der Schale (1), gesehen im radialen Schnitt, ausgebildet ist, wobei die gewählte Tangente der mittleren Neigung in dem den Bohrungen (3) entsprechenden Abschnitt der Schale (1) entspricht, und daß die Schale (1) an einem Träger (7) montiert ist, dessen Form der Rückseite der Schale (1) entspricht und der eine der ebenen Ansatzfläche (10) der Schale (1) entsprechende ebene Andrückfläche (70) hat.

7. Form nach Anspruch 3, dadurch gekennzeichnet, daß die Rückseite der Schale (1) eine kreisförmige Rille aufweist, deren Boden die Schultern (30) von mehreren Bohrungen (3) bildet, und daß das angesetzte Teil aus einer mehreren Bohrungen gemeinsamen Verschlußplatte (6) besteht.

8. Verfahren zur Herstellung eines Einsatzes (4) für eine Form nach Anspruch 2, bei dem
eine Spritzgußform mit Hilfe der Schale (1), an der alle Bohrungen (3) exakt dem Umriß der Markierung entsprechend und die Dicke der Schale (1) durchquerend ausgebildet sind, sowie mit Hilfe zweier Deckel (41, 42) gebildet wird, die sich exakt an die Innenseite bzw. Außenseite der Form (1) wenigstens am Ort der Bohrung (3) anfügen, wobei der Deckel (41) der Außenseite einen Einspritzkanal (43) aufweist, der auf jeder Bohrung (3) mündet,
dann in die so gebildete Form ein Material in flüssiger Phase eingespritzt wird, und dann nach Verfestigung die Deckel (41, 42) und das für den Einsatz (4) nicht benötigte Material entfernt werden.

9. Verfahren zum Formen eines Luftreifens, der an wenigstens einer seiner Flanken mit Hilfe einer Form nach einem der Ansprüche 1 bis 6 geformte Markierungen trägt, wobei die Markierungen bezogen auf die Flankenoberfläche überstehend oder vertieft ausgebildet sind, wobei die Entlüftung im Abschnitt der Markierungen durch das am gesamten Umfang der Markierungen bestehende Spiel sichergestellt ist.

10. Verfahren zum Formen nach Anspruch 9, dadurch gekennzeichnet, daß der Überstand oder die Tiefe der Markierungen größer als 0,5 mm ist.
